# EUROPÄISCHE PATENTSCHRIFT

(11) **EP 1 378 675 B1**
(45) Veröffentlichungstag und Bekanntmachung des Hinweises auf die Patenterteilung: **08.10.2008**
(21) Anmeldenummer: 03014920.7
(22) Anmeldetag: 01.07.2003
(51) Int. Cl.: F16C 17/10

(54) **Elastisches Gleitlager mit Dichtfunktion zwischen Welle und Drehelement**
Elastic sliding bearing with sealing function between shaft and rotating element
Palier lisse élastique avec fonction d'étanchéité entre arbre et élément rotatif

(30) Priorität: 05.07.2002 DE 10230561
(43) Veröffentlichungstag der Anmeldung: 07.01.2004
(73) Patentinhaber: Carl Freudenberg KG, 69469 Weinheim (DE)
(72) Erfinder: Freitag, Edgar, 34613 Schwalmstadt (DE); Braun, Otmar, 34621 Frielendorf (DE)

(56) Entgegenhaltungen:
- DE-A1- 10 039 808
- DE-A1- 10 059 759
- DE-U- 1 766 338
- GB-A- 1 042 265
- US-A- 3 210 108
- US-A- 4 878 767

## Beschreibung

### Technisches Gebiet

Für verschiedene Zwecke werden Drehelemente eingesetzt, die um eine Welle oder einen Wellenstumpf drehend Bewegungen ausführen. Dabei kann das Drehelement eine vollständige Rotation vollführen oder auch nur eine teilweise hin und her gehende Rotationsbewegung. Die Drehelemente werden über Gleitlager oder auch Kugellager auf der Welle bzw. dem Wellenstumpf gelagert. Von Nachteil hierbei ist, dass Schmutzteilchen in die Lagerung eindringen können, so dass die Drehbewegung des Drehelements behindert wird. Dieses trifft besonders dann zu, wenn das Drehelement beispielsweise durch Federkraft verdreht wird. Bei gleichbleibender Federkraft wird mit zunehmender Verschmutzung an der Lagerung das Drehelement langsamer gedreht und kann in besonderen Situationen sogar eine vollständige Hemmung erfahren bzw. verschleißen.

Durch die US-A-4,878,767 ist eine Vorrichtung bekannt geworden, bei der auf einer ortsfesten Welle ein Drehelement drehbeweglich angeordnet ist, das auf seiner der Welle zugewandten Innenseite mit einer elastischen Lagerung und Dichtung versehen ist. Von diesem Stand der Technik geht die vorliegende Erfindung aus.

### Darstellung der Erfindung:

Der Erfindung liegt die Aufgabe zugrunde, eine möglichst einfache und in ihrer Wirksamkeit wenig oder gar nicht beeinträchtigte Verbindung zwischen dem Drehelement und der ortsfesten Welle bzw. dem ortsfesten Wellenstumpf herzustellen. Die Verbindung soll möglichst einfach in ihrer konstruktiven Ausführungsform sein, eine leichte Herstellung und auch eine leichte Montage ermöglichen.

Die Lösung der gestellten Aufgabe wird durch die Merkmale des Anspruchs 1 errecht. Die Unteransprüche 2 bis 8 stellen vorteilhafte Weiterbildungen der Erfindung dar. Die Dichtung übernimmt sowohl die Lagerung des Drehelements auf dem Wellenstumpf als auch eine Dichtfunktion, so dass eine Verschmutzung der sich gegeneinander drehenden Flächen von Drehelement und Wellenstumpf vermieden wird.

Die Dichtung wird formschlüssig und verdrehsicher am Drehelement befestigt. Bei der Drehbewegung des Drehelements dreht die Dichtung folglich mit. Die Formschlüssige Verdrehsicherung ist auf verschiedene Weise möglich. Es ist jedoch günstig, wenn sie aus an der Dichtung vorhandenen radial nach außen weisenden Nocken besteht, welche in entsprechende Ausnehmungen am Drehelement einrasten. In Fortführung des Erfindungsgedankens wird die Abstützwulst im Bereich der Nocken für die Verdrehsicherung angebracht. Die Dichtung selbst ist ringförmig ausgebildet und ihre Ringinnenfläche ist mit Abstand zur Fläche des Wellenstumpfes angebracht. Hierdurch wird eine äußerst geringe Reibungskraft bei der Drehbewegung erzeugt. Die Ringaußenfläche ist dagegen eine zum Wellenende hin ausgerichtete Schräge, die mit einer gegenläufigen Schräge am Drehelement korrespondiert. Durch diese Schräge wird eine äußerst sichere Befestigung der Dichtung am Drehelement erreicht. Bei der Montage schnappt die Dichtung hinter die schräg ausgebildete, nach innen gerichtete Nase des Drehelements.

Axial der Abstützwulst gegenüberliegend ist die Dichtung mit einer am Wellenstumpf anliegenden Abstreifkante versehen. Diese Abstreifkante verhindert, dass Schmutz zwischen das Drehelement und den Wellenstumpf eindringen kann. Dabei ist es von Vorteil, wenn die Abstreifkante axial über das Drehelement hervorsteht.

### Ausführung der Erfindung:

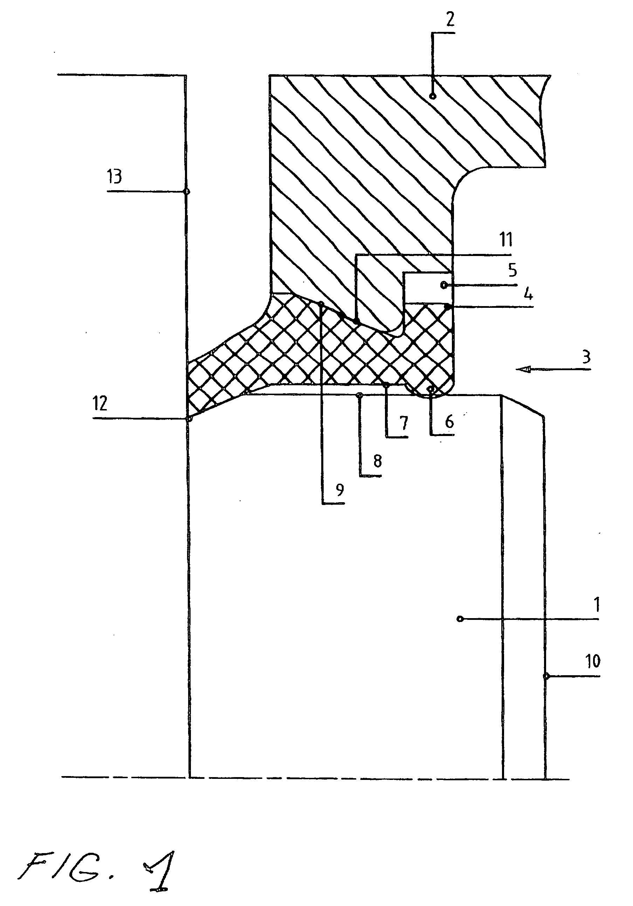

Anhand eines in der Zeichnung dargestellten Ausführungsbeispiels wird die Erfindung nachstehend näher erläutert.

In der beiliegenden Figur ist auf einem feststehenden Wellenstumpf 1 das Drehelement 2 angeordnet. Das Drehelement 2 kann beispielsweise ein Bremspedal sein, wie es bei Kraftfahrzeugen Verwendung findet. Zwischen dem Wellenstumpf 1 und dem Drehelement 2 ist die elastische Dichtung 3 eingefügt. Die Dichtung 3 hat auf ihrem Umfang mehrere nach außen weisende Nocken 4, die in entsprechend gestaltete Ausnehmungen 5 am Drehelement 2 eingerastet sind. Dadurch ist die Dichtung 3 verdrehsicher am Drehelement 2 befestigt. An ihrem nach außen weisenden Innenrand ist die Dichtung 3 mit einer umlaufenden Abstützwulst 6 versehen, welche die Funktion einer Lagerung des Drehelements 2 auf dem Wellenstumpf 1 übernimmt.

Wie in dem gezeigten Schnitt erkennbar ist die Dichtung 3 ringförmig ausgebildet. Die Ringinnenfläche 7 ist mit einem geringen Abstand zur Fläche 8 des Wellenstumpfs 1 angeordnet (Verringerung der Reibung, muß sein um entsprechenden Pressungsverlauf an der Dicht-Abstreifkante zu erzeugen) Die Ringaußenfläche 9 der Dichtung 3 hat eine zum Wellenende 10 hin ausgerichtete Schräge, welche mit der gegenläufigen Schräge an der Innenfläche 11 am Drehelement 2 korrespondiert. Diese Schräge erlaubt bei der Montage von Drehelement 2 und Dichtung 3 ein Einschnappen der Dichtung 3 am Drehelement 2. Die Dichtung 3 wird hierfür in die Ringöffnung im Drehelement 2 eingeschoben.

An ihrem nach innen gerichteten Teil ist die Dichtung 3 mit einer am Wellenstumpf 1 anliegenden Abstreifkante 12 versehen. Mit dieser Abstreifkante 12 stützt sich die Dichtung 3 mit ihrer Innenseite auf dem Wellenstumpf 1 ab. Die Abstreifkante 12 verhindert, dass Schmutz und Wasser an die Innenflächen von Wellenstumpf 1 und Dichtung 3 gelangen kann. Die Abstreifkante 12 kann nach innen vorgezogen sein und gleichzeitig als Abstandgeber zwischen dem Drehelement 2 und der radialen Wellenfläche 13 dienen.

## Patentansprüche

1. Auf einer ortsfesten Welle oder Wellenstumpf drehbeweglich angeordnetes Drehelement, das auf seiner der Welle bzw. dem Wellenstumpf zugewandten Innenseite mit einer elastischen Lagerung und Dichtung versehen ist, **dadurch gekennzeichnet, dass** die Lagerung der Dichtung (3) durch eine an ihrem nach außen weisenden Innenrand angeordnete radial nach innen gerichtete Abstützwulst (6) erfolgt und als Dichtteil eine der Abstützwulst (6) axial gegenüberliegende Abstreifkante (12) vorgesehen ist.

2. Drehelement nach Anspruch 1, **dadurch gekennzeichnet, dass** die Dichtung (3) formschlüssig und verdrehsicher am Drehelement (2) befestigt ist.

3. Drehelement nach einem der Ansprüche 1 oder 2, **dadurch gekennzeichnet, dass** die formschlüssige Verdrehsicherung aus an der Dichtung (3) vorhandenen radial nach außen weisenden Nocken (4) besteht, die in entsprechende Ausnehmungen (5) am Drehelement 2 einrasten.

4. Drehelement nach einem der Ansprüche 1 bis 3, **dadurch gekennzeichnet, dass** die Abstützwulst (6) im Bereich der Nocken (4) für die Verdrehsicherung angebracht ist.

5. Drehelement nach einem der Ansprüche 1 bis 4, **dadurch gekennzeichnet, dass** die Dichtung (3) ringförmig ausgebildet ist und dass die Ringinnenfläche (7) mit Abstand zur Fläche (8) des Wellenstumpfes (1) angeordnet ist.

6. Drehelement nach einem der Ansprüche 1 bis 5, **dadurch gekennzeichnet, dass** die Ringaußenfläche (9) eine zum Wellenende (10) hin ausgerichtete Schräge aufweist, die mit der gegenläufigen Schräge an der Innenfläche (11) am Drehelement (2) korrespondiert.

7. Drehelement nach einem der Ansprüche 1 bis 6, **dadurch gekennzeichnet, dass** die Abstreifkante (12) am Wellenstumpf (1) anliegt

8. Drehelement nach Anspruch 7, **dadurch gekennzeichnet, dass** die Abstreifkante (12) axial über das Drehelement (2) hervorsteht und an einer radialen Wellenfläche (13) axial anliegt.

## Claims

1. Rotating element which is arranged in a rotationally movable fashion on a fixed shaft or stub shaft and is provided with an elastic bearing and seal on its inner side facing the shaft or stub shaft, **characterized in that** the bearing of the seal (3) is provided by means of a radially inwardly directed supporting bead (6) which is arranged on the outwardly pointing inner edge of said seal (3), and a scraper edge (12), lying axially opposite the supporting bead (6), is provided as a sealing component.

2. Rotating element according to Claim 1, **characterized in that** the seal (3) is attached to the rotating element (2) in a positively locking and captive fashion.

3. Rotating element according to one of Claims 1 or 2, **characterized in that** the positively locking captive connection is composed of radially outwardly pointing cams (4) which are provided on the seal (3) and latch into corresponding recesses (5) on the rotating element (2).

4. Rotating element according to one of Claims 1 to 3, **characterized in that** the supporting bead (6) is attached in the region of the cams (4) for the captive connection.

5. Rotating element according to one of Claims 1 to 4, **characterized in that** the seal (3) is of annular design, and **in that** the annular inner face (7) is arranged at a distance from the face (8) of the stub shaft (1).

6. Rotating element according to one Claims 1 to 5, **characterized in that** the annular outer face (9) has an oblique face which is oriented toward the shaft end (10) and corresponds to the oblique face extending in the opposite direction on the inner face (11) on the rotating element (2).

7. Rotating element according to one of Claims 1 to 6, **characterized in that** the scraper edge (12) bears against the stub shaft (1).

8. Rotating element according to Claim 7, **characterized in that** the scraper edge (12) protrudes axially beyond the rotating element (2) and bears axially against a radial shaft face (13).

## Revendications

1. Elément rotatif disposé en mouvement de rotation sur un arbre ou un bout d'arbre stationnaire, qui est pourvu d'un appui et d'un joint d'étanchéité élastique sur son côté intérieur tourné vers l'arbre ou le bout d'arbre, **caractérisé en ce que** l'appui du joint d'étanchéité (3) est assuré par un bourrelet d'appui (6) orienté radialement vers l'intérieur et disposé sur son bord intérieur dirigé vers l'extérieur et il est prévu comme partie d'étanchéité une arête de raclage (12) située axialement à l'opposé du bourrelet d'appui (6).

2. Elément rotatif selon la revendication 1, **caractérisé en ce que** le joint d'étanchéité (3) est fixé à l'élément rotatif (2) par complémentarité de forme et de manière protégée contre la rotation.

3. Elément rotatif selon l'une quelconque des revendications 1 ou 2 **caractérisé en ce que** la protection contre la rotation par complémentarité de forme se compose de cames (4) présentes sur le joint d'étanchéité (3) et orientées radialement vers l'extérieur, qui s'engagent dans des évidements correspondants (5) sur l'élément rotatif (2).

4. Elément rotatif selon l'une quelconque des revendications 1 à 3, **caractérisé en ce que** le bourrelet d'appui (6) est installé dans la région des cames (4) assurant la protection contre la rotation.

5. Elément rotatif selon l'une quelconque des revendications 1 à 4, **caractérisé en ce que** le joint d'étanchéité (3) est de forme annulaire et **en ce que** la face annulaire interne (7) est disposée à distance de la surface (8) du bout d'arbre (1).

6. Elément rotatif selon l'une quelconque des revendications 1 à 5, **caractérisé en ce que** la surface annulaire externe (9) présente une zone inclinée en direction de l'extrémité (10) de l'arbre, qui correspond à la zone inclinée opposée sur la surface interne (11) de l'élément rotatif (2).

7. Elément rotatif selon l'une quelconque des revendications 1 à 6, **caractérisé en ce que** l'arête de raclage (12) est appliquée sur le bout d'arbre (1).

8. Elément rotatif selon la revendication 7, **caractérisé en ce que** l'arête de raclage (12) est saillante axialement au-delà de l'élément rotatif (2) et est appliquée axialement sur une surface d'arbre radiale (13).
